# EUROPEAN PATENT SPECIFICATION

(11) **EP 0 175 556 B1**
(45) Date of publication and mention of the grant of the patent: **23.02.1994**
(21) Application number: 85306522.5
(22) Date of filing: 13.09.1985
(51) Int. Cl.: C22B 3/00, C22B 3/02

(54) **Process for the pressure oxidation leaching of non-ferrous metal containing sulphidic material**
Verfahren zur Oxidationsdrucklaugung von nichteisenmetallenthaltendem sulfidischem Material
Procédé de lixiviation oxydante sous pression de matières sulfurées contenant des métaux non-ferreux

(30) Priority: 19.09.1984 CA 463634
(43) Date of publication of application: 26.03.1986
(73) Proprietor: Sherritt Gordon Limited, Toronto, Ontario (CA)
(72) Inventor: Weir, Donald R., Fort Saskatchewan Alberta (CA)
(74) Representative: Lambert, Hugh Richmond

(56) References cited:
- DE-B- 1 091 568
- GB-A- 1 377 360
- GB-A- 1 544 763
- US-A- 2 871 116
- US-A- 3 392 003
- US-A- 3 961 908
- US-A- 4 374 101
- US-A- 4 399 109

## Description

This invention relates to the recovery of non-ferrous metal values, for example zinc, nickel, copper, lead, cobalt or gold values, from sulphidic material by pressure oxidation leaching in an autoclave assembly through which the material is continuously passed.

It is well known that the pressure oxidation of such sulphidic material is an exothermic reaction. In the past, it has been customary to carry out such a reaction in a multicompartment autoclave, with successive compartments being separated by dividers and with each cell containing an agitator. The sulphidic material to be oxidised is introduced as a slurry into the autoclave at one end, and the slurry flows from one compartment to another over the respective dividers, leaving the autoclave at the other end. Oxygen is supplied to the autoclave compartments to effect the oxidation.

With present practice, it has usually been necessary to supply heat to the first autoclave compartment, for example by steam injection or by preheating the feed slurry, in order to maintain the reaction. For example, to oxidise pyrite (FeS₂), it is necessary that the temperature be at least about 165°C, so that preheating is often required to ensure initiation of exothermic reaction. In subsequent compartments, the heat generated by the pressure oxidation reaction is likely to raise the temperature of the slurry to an undesirably high value, with the result that cooling is necessary. Undesirably high temperatures, and hence also undesirably high pressures, should be prevented because of limitations with respect to the strength of the autoclave. The necessity for supplying heat to the first compartment and for cooling subsequent compartments represents wasted energy and is detrimental to economic operation.

One such multi-compartment autoclave pressure oxidation leach process for non-ferrous sulphidic materials is disclosed in US-A-3 961 908.

Another such autoclave is shown in US-A-2 871 116. Here the autoclave has an enlarged upstream compartment communicating with a feed tower in which feed slurry is preheated before feeding to the enlarged upstream compartment, by counter-current contact with hot process gases emanating from the reactor. At the downstream end process air and high pressure steam, either start-up steam, or generated at the downstream end as part of a heat recovery operation are fed to the autoclave and pass from compartment to compartment in counter-current flow by means of external pumps.

Also in that case the autoclave is further subdivided by baffles extending downwardly into the slurry at intervals along the length of the autoclave and which effectively divide the autoclave into a number of quite separate compartments. The serial flow of oxygenating gas from one compartment to the next, counter-current to the direction of flow of the slurry through the autoclave therefore has to be achieved by a series of pumps which feed the oxygenating gas from one compartment to the next by a series of external conduits.

In contrast the present invention employs the form of multicompartment autoclave of the type shown in US-A-3 961 908, i.e. with an uninterrupted open gas space extending along the length of the autoclave above the level of the slurry and is based on the discovery that, in that type of autoclave, the temperature in the various autoclave compartments can he maintained at optimum values, without the necessity for a substantial amount of external heat or cooling and utilising the exothermic nature of the reaction, by the use of an autoclave assembly in which the first compartment is substantially larger than each of the subsequent compartments, so as to allow a greater degree of reaction to occur in the first compartment and thereby causing a higher temperature therein. More specifically, the volume of the first compartment is such as to contain a volume of reaction slurry that is from 50 to 200% larger than contained in each successive compartment.

Thus the invention provides a process for the recovery of non-ferrous metals from sulphidic material containing same, which comprises feeding an aqueous slurry of the sulphidic material to the upstream end of an elongated autoclave subdivided internally into a succession of compartments by a plurality of dividing walls extending upwardly in the autoclave and over which the slurry flows from one compartment to the next during its passage through the autoclave, the height of the internal dividing walls being less than the internal height of the autoclave thereby providing an uninterrupted open gas space along the length of the autoclave above the level of the slurry in the autoclave, the first compartment of the series containing a volume of slurry that is greater than that contained by any of the succeeding compartments considered individually, feeding an oxygen-containing gas to the autoclave to maintain a pressurised atmosphere in the autoclave and providing an oxygen partial pressure therein in the range 50 to 2000 kPa, thereby subjecting the sulphidic material to a pressurised oxidation leach, and recovering the leached slurry from the downstream end of the autoclave, wherein
there is maintained in the first compartment and throughout the reaction process a volume of reactant slurry that is from 50 to 200% larger than the volume of reactant slurry contained in any of the individual downstream compartments, part of said aqueous slurry, or fresh feed water, or a stream of recycled process solution, optionally, and if necessary, being fed also into one or more of the compartments downstream of the first compartment so that optimum temperature conditions in the compartments downstream of the first compartment are maintained without any extraneous heating or cooling of those downstream compartments.

The invention is applicable to the various kinds of non-ferrous metal and iron-containing sulphidic materials conventionally subjected to pressure oxidation, for example ores, concentrates and mattes.

The invention is also useful in the treatment of iron-containing complex so-called sulpho salts containing antimony and/or arsenic, as well as selenides and tellurides. The material may comprise selenides and tellurides containing at least one of the group consisting of gold, silver, platinum, palladium, osmium, iridium, ruthenium, rhenium, rhodium and rubidium.

Although some external heat may be necessary on start-up, the greater volume of slurry in the first compartment compared to that in each of the successive compartments enables the slurry in the first compartment to remain at a substantially high temperature to actuate the pressure oxidation reaction in incoming sulphidic material, while also enabling the slurry in the successive compartments to remain at adequate temperatures which are not too high. Thus, in a continuous operation, it becomes unnecessary with the present invention to preheat slurry feed to the first compartment with an external heat source to the same extent as required previously, or to cool successive compartments to the same extent as required previously, thereby obtaining a considerably saving in energy. It is consequently also possible to achieve a higher throughput of sulphidic material than would otherwise be the case. Also, undesirably steep increases in temperature from one compartment to another, such as occur in the prior art, can be avoided. Also, compared with the conventional compartmental autoclave, it has been found that the dividing walls of the autoclave used in the present invention may be higher, with the result that the actual volume of the autoclave can be increased by up to about 10% compared to the conventional autoclave.

According to a further feature of the invention, slurry, water or recycled process solution may be injected into one or more successive compartments, for example to the third compartment, in order to provide additional control of the temperatures in the successive compartments. This feature also increases slurry retention time in the first compartment, and therefore provides an additional means of controlling the temperature of the slurry in the various compartments without the use of external heat or cooling.

Advantageously, the pulp density of the slurry in the first compartment may be higher than in the successive compartments so that a smaller heat sink is provided in the first compartment, thus allowing an even higher temperature to be achieved with the same degree of reaction. For example, the pulp density in the first compartment may be from about 5 to about 60% solids, with the pulp density in successive compartments being from about 3 to about 40% solids.

Other features of the invention will be apparent from the following description made with reference to the accompanying drawing in which:

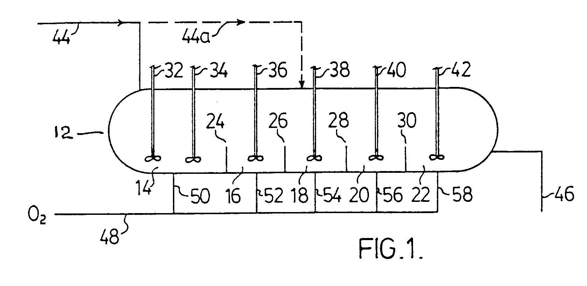

Figure 1 is a diagrammatic view of a horizontal autoclave assembly.

Referring to Figure 1, an elongated horizontal autoclave 12 has five successive compartments 14, 16, 18, 20, 22 separated by dividers 24, 26, 28, 30. The first compartment 14 is approximately twice the size of each of the other compartments. Agitators are provided to agitate the contents of each compartment, there being two agitators 32, 34 in the first compartment 14, with successive compartments 16, 18, 20, 22 containing agitators 36, 38, 40, 42 respectively.

An acidic feed slurry of non-ferrous metal and iron-containing sulphidic material is fed through feed line 44 into the first compartment 14, and passes through successive compartments 16, 18, 20 and 22 before being discharged from the last compartment 22 through a discharge line 46. Oxygen is supplied in parallel to each compartment 14, 16, 18, 20, 22 through an oxygen supply line 48 which has branch lines 50, 52, 54, 56, 58 upwardly into each of the respective compartments. As shown, the dividers 24, 26, 28, 30 are successively lower in height, with the slurry flowing over each divider from one compartment to another.

A typical zinc and iron-containing sulphidic material may contain (by weight) from about 20 to about 60% zinc, from about 35 to about 3% iron, and from about 38 to about 30% sulphur. A typical refractory gold ore or concentrate may contain from about 3 to about 300 g/t gold, from about 3 to about 45% iron, from about 1 to about 45% sulphur, and from about 0.1 to about 30% arsenic. A typical copper-nickel matte may contain from about 30 to about 70% nickel, about 40 to about 3% copper, and from about 5 to about 25% sulphur. Platinum group metals may also be present.

The incoming feed slurry may for example have a pulp density of from about 35 to about 85% solids, with the pulp density in the first compartment 14 being from about 5 to about 60% solids, and the pulp density in each of the successive compartments being from less than about 0.1% to about 60% solids.

Although the reactions are complex, the following equations illustrate typical reactions occurring in the pressure oxidation acid leaching of zinc and iron-containing sulphidic material:

ZnS + Fe₂(SO₄)₃ ----> ZnSO₄ + 2FeSO₄ + S°

FeS + 2O₂ ----> FeSO₄

2FeSO₄ + H₂SO₄ + 0.5O₂ ----> Fe₂(SO₄)₃ + H₂O

For such zinc-containing material, the oxygen overpressure may be from about 200 to about 2000 kPa. The temperature of the large first compartment 14 may be from about 135° to about 150°C, and the temperature of each other compartment may be from about 145° to about 155°C.

Refractory gold ore or concentrates typically contain pyrite and/or arsenopyrite which must be oxidised to liberate the gold. Pyrite (FeS₂) especially is a very refractory compound and hence requires a relatively high temperature of at least about 165°C for oxidation to occur reasonably rapidly in accordance with the following equation:

2FeS₂ + 7O₂ + 2H₂O ----> 2FeSO₄ + 2H₂SO₄

The large volume of the first compartment 14 results in a high degree of sulphur oxidation occurring in the first compartment. Since it is such sulphur oxidation which creates the heat to maintain an autogenous temperature, the heat produced in this manner in the first compartment provides the required heat for pyrite oxidation in the first compartment. During start-up, heat may of course have to be supplied to the first compartment 14 or the feed slurry may have to be preheated in a manner which is well known to a person skilled in the art.

During continuous operation, the temperature in each autoclave compartment can be controlled by adjusting the solids content of the feed slurry through feed line 44. Also, besides feeding slurry into the first compartment 14, slurry, water or recycled process solution may also be fed through feed line 44a into one or more of the other compartments such as the third compartment 18 as indicated in dotted outline in Figure 1, in order to provide a heat sink for cooling purposes. Alternatively, slurry, water or recycled process solution may be fed through line 44a.

Other embodiments of the invention will be readily apparent to a person skilled in the art without departing from the invention herein described. It is envisaged for example, that although the particular embodiments described herein employ an autoclave having a first compartment physically having a volume or total volume larger than that of any subsequent compartment, the process can be carried out in a multicompartment autoclave in which all the compartments are physically the same size, but in which the actual volume of slurry contained in the first compartment is greater than that in any of the other compartments.

## Claims

1. A process for the recovery of non-ferrous metals from sulphidic material containing same, which comprises feeding an aqueous slurry of the sulphidic material to the upstream end of an elongated autoclave (12) subdivided internally into a succession of compartments (14, 16, 18, 20, 22) by a plurality of dividing walls (24, 26, 28, 30) extending upwardly in the autoclave and over which the slurry flows from one compartment to the next during its passage through the autoclave, the height of the internal dividing walls (24, 26, 28, 30) being less than the internal height of the autoclave thereby providing an uninterrupted open gas space along the length of the autoclave above the level of the slurry in the autoclave, the first compartment (14) of the series containing a volume of slurry that is greater than that contained by any of the succeeding compartments (16, 18, 20, 22) considered individually, feeding an oxygen-containing gas to the autoclave to maintain a pressurised atmosphere in the autoclave and providing an oxygen partial pressure therein in the range 50 to 2000 kPa, thereby subjecting the sulphidic material to a pressurised oxidation leach, and recovering the leached slurry from the downstream end of the autoclave, characterised in that:
there is maintained in the first compartment (14) and throughout the reaction process a volume of reactant slurry that is from 50 to 200% larger than the volume of reactant slurry contained in any of the individual downstream compartments, part of said aqueous slurry, or fresh feed water, or a stream of recycled process solution, optionally, and if necessary, being fed also into one or more of the compartments (16, 18, 20, 22) downstream of the first compartment (14) so that optimum temperature conditions in the compartments (16, 18, 20, 22) downstream of the first compartment (14) are maintained without any extraneous heating or cooling of those downstream compartments.

2. A process according to claim 1, wherein the oxygen-containing gas (48) is fed as a plurality of parallel gas streams to each of the compartments (14, 16, 18, 20, 22) and upwardly therein through the volume slurry contained within each compartment.

3. A process according to claim 1 or 2, characterised in that each succeeding dividing wall (24, 26, 28, 30) in the autoclave (12) is of lesser vertical height than the preceding one.

4. A process according to any one of claims 1 to 3, wherein the individual volumes of slurry contained within each compartment (14, 16, 18, 20, 22) of the autoclave (12) are mechanically agitated throughout the oxidation process.

5. A process according to any one of claims 1 to 4, characterised in that the pulp density in the first compartment (14) of the autoclave (12) is maintained higher than that in the succeeding compartments.

6. A process according to any one of claims 1 to 5, characterised in that said non-ferrous metal comprises one or more of the following: zinc, nickel, gold, cobalt, copper and lead.

7. A process according to any one of claims 1 to 5, wherein the sulphidic material contains as said, or one of said non-ferrous metals, a selenide or telluride containing at least one of the following: gold, silver, platinum, palladium, osmium, iridium, ruthenium, rhenium, rhodium and rubidium.

8. A process according to any one of claims 1 to 7, wherein feed slurry containing said sulphidic material is an aqueous acidic slurry.

## Patentansprüche

1. Verfahren zur Gewinnung von Nichteisenmetallen aus sulfidischem Material, das diese enthält, umfassend die Einspeisung einer wässerigen Aufschlämmung des sulfidischen Materials in das stromaufwärtige Ende eines länglichen Autoklaven (12), der im Innern in aufeinanderfolgende Kompartimenten (14, 16, 18, 20, 22) durch eine Vielzahl von Trennwänden (24, 26, 28, 30) unterteilt ist, die sich im Autoklaven aufwärts erstrecken und über die die Aufschlämmung von einem Kompartiment in das nächste während ihres Durchgangs durch den Autoklaven fließt, wobei die Hörte der inneren Trennwände (24, 26, 28, 30) geringer ist als die innere Höhe des Autoklavens, wodurch ein im Autoklaven ununterbrochener offener Gasraum entlang der Autoklavenlänge oberhalb des Niveaus der Aufschlämmung geschaffen wird, und das erste Kompartiment (14) der Serie ein Aufschlämmungsvolumen enthält, das größer ist als das in einem der nachfolgenden Kompartimente (16, 18, 20, 22), einzeln betrachtet, enthaltene Volumen ist, Einspeisung eines Sauerstoff enthaltenden Gases in den Autoklaven, um im Autoklaven eine unter Druck stehende Atmosphäre aufrechtzuerhalten, und um einen Sauerstoff-Partialdruck im Bereich von 50 bis 2000 kPs bereitzustellen, wodurch das sulfidische Material einer Qxidationsdrucklaugung unterworfen wird, und Gewinnung der ausgelaugten Aufschlämmung aus dem stromabwärtigen Ende des Autoklavens, dadurch gekennzeichnet, daß:
im ersten Kompartiment (14) und während das Verfahrens ein Volumen der Reaktanten-Aufschlämmung aufrechterhalten wird, das 50 bis 200 % größer als das Volumen der Reaktanten-Aufschlämmung in einem der individuellen stromabwärtigen Kompartimente ist, ein Teil dieser wässerigen Aufschlämmung, oder frisches Wasser, oder ein Strom der recyclisierten Prozesslösung gegebenenfalls, und wenn notwendig, ebenfalls einem oder mehreren der Kompartimente (16, 18, 20, 22) stromabwärte vom ersten Kompartiment (14) zugeführt wird, um optimale Temperaturbedingungen in den Kompartimenten (16, 18, 20, 22) stromabwärts vom ersten Kompartiment (14) ohne äußeres Erhitzen oder Kühlen dieser stromabwärtigen Kompartimente aufrechtzuerhalten.

2. Verfahren nach Anspruch 1, dadurch gekennzeichnet, daß des Sauerstoff enthaltende Gas (48) als Vielzahl paralleler Gasströme jedem der Kompartiment (14, 16, 18, 20, 22) und darin aufwärts gerichtet durch die in jedem Kompartiment enthaltende Aufschlämmung zugeführt wird.

3. Verfahren nach Anspruch 1 oder 2, dadurch gekennzeichnet, daß jede der aufeinanderfolgenden Trennwände (24, 26, 28, 30) im Autoklaven (12) eine geringere vertikale Höhe als die vorhergehende besitzt.

4. Verfahren nach einem der Ansprüche 1 bis 3, dadurch gekennzeichnet, daß die individuellen Volumina der in jedem der Kompartimente (14, 16, 18, 20, 22) des Autoklavens (12) enthaltenen Aufschlämmung während des Oxidationsverfahrens mechanisch gerührt werden.

5. Verfahren nach einem der Ansprüche 1 bis 4, dadurch gekennzeichnet, daß die Dichte (pulp density) im ersten Kompartiment (14) des Autoklavens (12) höher als die in den nachfolgenden Kompartimenten gehalten wird.

6. Verfahren nach einem der Ansprüche 1 bis 5, dadurch gekennzeichnet, daß das Nichteisenmetall eines oder mehrere der folgenden umfaßt: Zink, Nickel, Gold, Kobalt, Kupfer und Blei.

7. Verfahren nach einem der Ansprüche 1 bis 5, dadurch gekennzeichnet, daß das sulfidische Material als oder als eines der Nichteisenmetalle ein Selenid oder Tellurid enthält, das mindestens eines der folgenden Metalle enthält: Gold, Silber, Platin, Palladium, Osmium, Iridium, Ruthenium, Rhenium, Rhodium and Rubidium.

8. Verfahren nach einem der Ansprüche 1 bis 7, dadurch gekennzeichnet, daß die das sulfidische Material enthaltende Aufschlämmung eine wässerige saure Aufschlämmung ist.

## Revendications

1. Procédé de récupération de métaux non ferreux à partir d'une matière sulfurée qui les contiennent, qui comprend l'introduction d'une bouillie aqueuse de matière sulfurée dans l'extrémité amount d'un autoclave allongé (12) subdivisé intéricurement en une succession de compartiments (14, 16, 18, 20, 22) par une multiplicité de parois diviseuses (24, 26, 28, 30) qui s'étendent vers le haut dans l'autoclave et au-dessus desquelles la bouillie s'écoule d'un compartiment au suivant pendant son passage dans l'autoclave, la hauteur des parois diviseuses internes (24, 26, 28, 30) étant inférieure à la hauteur interne de l'autoclave en formant ainsi un espace ouvert ininterrompu pour les gaz sur la longueur de l'autoclave au-dessus du niveau de la bouillie dans l'autoclave, le premier compartiment (14) de la série contenant un volume de bouillie qui est plus grand que celui qui est contenu par l'un quelconque des compartiments successifs (16, 18, 20, 22) considéres individuellement, l'introduction d'un gaz contenant de l'oxygène dans l'autoclave pour maintenir une atmosphère sous pression dans l'autoclave et pour former une pression partielle d'oxygène dans celui-ci, située dans la plage de 50 à 2 000 kPa, pour soumettre ainsi la matière sulfurée à une lixiviation par oxydation sous pression, et la récupération de la bouillie lixiviée par l'extrémité aval de l'autoclave, caractérisé en ce que :
on maintient dans le premier compartiment (14) et dans tout le procédé réactionnel un volume de bouillie réagissante qui est supérieur de 50 à 200 % au volume de bouillie réagissante contenu dans l'un quelconque des compartiments aval individuels, une partie de ladite bouillie aqueuse, ou de l'eau fraiche d'alimentation, ou un courant de solution de procédé recyclée étant éventuellement et si nécessaire introduit également dans un ou plusieurs des compartiments (16, 18, 20, 22) en aval du premier compartiment (14) de sorte que les conditions de température optimum dans les compartiments (16, 18, 20, 22) en aval du premier compartiment (14) sont maintenues sans aucun chauffage ou refroidissement externe de ces compartiments aval.

2. Procédé selon la revendication 1, dans lequel le gaz contenant de l'oxygène (48) est introduit sous forme d'une multiplicité de courants gazeux parallèles dans chacun des compartiments (14, 16, 18, 20, 22) et vers le haut dans ceux-ci à travers le volume de bouillie contenu dans chaque compartiment.

3. Procédé selon la revendication 1 ou 2, caractérisé en ce que chaque paroi diviseuse successive (24, 26, 28, 30) dans l'autoclave (12) est de hauteur verticale inférieure à la précédente.

4. Procédé selon l'une quelconque des revendications 1 à 3, dans lequel les volumes individuels de bouillie contenus dans chaque compartiment (14, 16, 18, 20, 22) de l'autoclave (12) sont agités mécaniquement dans tout le procédé d'oxydation.

5. Procédé selon l'une quelconque des revendications 1 à 4, caractérisé en ce que la densité de pulpe dans le premier compartiment (14) de l'autoclave (12) est maintenue supérieure à celle des compartiments successifs.

6. Procédé selon l'une quelconque des revendications 1 à 5, caractérisé en ce que ledit métal non ferreux comprend un ou plusieurs des métaux suivants : zinc, nickel, or, cobalt, cuivre et plomb.

7. Procédé selon l'une quelconque des revendications 1 à 5, dans lequel la matière sulfurée contient comme métaux non ferreux ou comme l'un desdits métaux non ferreux un séléniure ou un tellurure contenant au moins l'un des métaux suivants : or, argent, platine, palladium, osmium, iridium, ruthénium, rhénium, rhodium et rubidium.

8. Procédé selon l'une quelconque des revendications 1 à 7, dans lequel la bouillie d'alimentation contenant ladite matière sulfurée est une bouillie acide aqueuse.
